# EUROPEAN PATENT APPLICATION

(11) **EP 3 792 043 A1**
(43) Date of publication of application: **17.03.2021**
(21) Application number: 19800025.9
(22) Date of filing: 22.04.2019
(51) Int. Cl.: B29C 65/02, B29C 65/14

(54) **JOINED ARTICLE PRODUCTION METHOD AND JOINED ARTICLE**

(30) Priority: 07.05.2018 JP 2018089044
(71) Applicant: Kanazawa Institute of Technology, Ishikawa 921-8501 (JP)
(72) Inventor: ENDO Kazuhiro, Nonoichi-shi Ishikawa 921-8501 (JP)
(74) Representative: Algemeen Octrooi- en Merkenbureau B.V.
(86) International application number: PCT/JP2019/017063
(87) International publication number: WO 2019/216182

(57) **Abstract**

A production method for a joined object is a method for producing a joined object by joining two objects together. The method includes: irradiating joining surfaces of the respective two objects with plasma; and bonding the joining surfaces irradiated with plasma, at a temperature lower than a melting point of a substance included in the objects.

## Description

### TECHNICAL FIELD

The present invention relates to a technology for joining objects together, and more particularly, to a method for joining two objects together to produce a joined object, and to a joined object obtained by joining two objects together.

### BACKGROUND ART

Methods for joining two objects together include joining methods using adhesives, joining methods using bolts, and joining methods using welding. Depending on the materials of the objects and required joining strength, for example, an appropriate joining method is selected.

### SUMMARY OF INVENTION

### TECHNICAL PROBLEM

Each of the joining methods set forth above has a problem. For example, when an adhesive is used, aged deterioration of the adhesive or generation of a volatile organic compound (VOC) could be a problem. When bolts are used, reduction in strength of the objects to be joined could be a problem. When welding is used, deterioration of the objects caused by heating could be a problem.

The present invention has been made in view of such a situation, and a purpose thereof is to provide an improved technology for joining objects together.

### SOLUTION TO PROBLEM

To solve the problems above, a production method for a joined object according to one aspect of the present invention is a method for producing a joined object by joining two objects together. The method includes: irradiating joining surfaces of the respective two objects with plasma; and bonding the joining surfaces irradiated with plasma, at a temperature lower than a melting point of a substance included in the objects.

In this aspect, two objects can be easily and strongly joined together without using an adhesive or bolts. This solves the problem of aged deterioration of an adhesive or generation of a volatile organic compound when an adhesive is used, the problem of reduction in strength of the objects to be joined when bolts are used, and the problem of deterioration of the objects caused by heating when welding is used. Also, even with a thick object, such as a plate with a thickness of 1 cm or greater, easy and strong joining is enabled.

The bonding may be performed at room temperature. In this aspect, since heating or cooling is unnecessary, the time, costs, and energy required for the joining can be reduced, and negative effects on the objects caused by the heating or cooling can be prevented.

The two objects may be any one combination of objects among: a combination of polypropylene and one of polypropylene, polyamides, polyphenylene sulfide, polyethylene terephthalate, polycarbonates, polymethyl methacrylate, aluminum, copper, titanium, iron, stainless steel, strontium titanate, lanthanum aluminate, magnesium oxide, and glass; a combination of a polyamide and one of polyamides, polyphenylene sulfide, polyethylene terephthalate, polycarbonates, polymethyl methacrylate, aluminum, copper, titanium, iron, and stainless steel; a combination of polyphenylene sulfide and one of polyphenylene sulfide, polyethylene terephthalate, polycarbonates, polymethyl methacrylate, aluminum, copper, titanium, iron, and stainless steel; a combination of polyethylene terephthalate and one of polyethylene terephthalate, polycarbonates, polymethyl methacrylate, aluminum, copper, titanium, iron, and stainless steel; a combination of a polycarbonate and one of polycarbonates, polymethyl methacrylate, aluminum, copper, titanium, iron, and stainless steel; a combination of polymethyl methacrylate and one of polymethyl methacrylate, aluminum, copper, titanium, iron, and stainless steel; a combination of a carbon fiber reinforced plastic containing polypropylene as a base material and one of polypropylene, polyamides, polyphenylene sulfide, polyethylene terephthalate, polycarbonates, polymethyl methacrylate, carbon fiber reinforced plastics containing polypropylene as a base material, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, stainless steel, strontium titanate, lanthanum aluminate, magnesium oxide, and glass; a combination of a carbon fiber reinforced plastic containing a polyamide as a base material and one of polypropylene, polyamides, polyphenylene sulfide, polyethylene terephthalate, polycarbonates, polymethyl methacrylate, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyphenylene sulfide as a base material and one of polypropylene, polyamides, polyphenylene sulfide, polyethylene terephthalate, polycarbonates, polymethyl methacrylate, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyethylene terephthalate as a base material and one of polypropylene, polyamides, polyphenylene sulfide, polyethylene terephthalate, polycarbonates, polymethyl methacrylate, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing a polycarbonate as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyether ether ketone as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyetherimide as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; and a combination of a carbon fiber reinforced plastic containing an epoxy resin as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel.

When the bonding is performed at room temperature, the two objects may be any one combination of objects among: a combination of polypropylene and one of polypropylene, polyamides, polyphenylene sulfide, polyethylene terephthalate, polycarbonates, polymethyl methacrylate, stainless steel, strontium titanate, lanthanum aluminate, and glass; a combination of a polyamide and one of polyamides, polyethylene terephthalate, and polymethyl methacrylate; a combination of polyethylene terephthalate and one of polyethylene terephthalate, polycarbonates, and polymethyl methacrylate; a combination of a polycarbonate and one of polycarbonates and polymethyl methacrylate; a combination of polymethyl methacrylate and polymethyl methacrylate; a combination of a carbon fiber reinforced plastic containing polypropylene as a base material and one of polypropylene, polyamides, polyphenylene sulfide, polyethylene terephthalate, polycarbonates, carbon fiber reinforced plastics containing polypropylene as a base material, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, aluminum, stainless steel, strontium titanate, lanthanum aluminate, and glass; a combination of a carbon fiber reinforced plastic containing a polyamide as a base material and one of polypropylene, polyamides, polyethylene terephthalate, carbon fiber reinforced plastics each containing a polyamide as a base material, and carbon fiber reinforced plastics containing polyethylene terephthalate as a base material; a combination of a carbon fiber reinforced plastic containing polyphenylene sulfide as a base material and polypropylene; a combination of a carbon fiber reinforced plastic containing polyethylene terephthalate as a base material and one of polypropylene and polyamides; and a combination of a carbon fiber reinforced plastic containing a polycarbonate as a base material and polypropylene.

The method may further include: joining one of the two objects and one surface of a film that can be joined with both of the two objects; and joining the other of the two objects and the other surface of the film. This aspect enables joining of two objects that cannot be easily joined directly, or joining at room temperature of two objects that require heating for their direct joining.

Another aspect of the present invention is a joined object. The joined object is formed by two objects joined together by chemical bonds between functional groups generated on joining surfaces of the respective two objects by plasma irradiation on the joining surfaces.

In this aspect, two objects can be easily and strongly joined together without using an adhesive or bolts, so that the strength of the joined object can be improved, and deterioration of the joined object can be reduced.

The joined object may further include a film disposed between the two objects. The joined object may be formed with one surface of the film and one of the two objects joined together and with the other surface of the film and the other of the two objects joined together. This aspect enables joining of two objects that cannot be easily joined directly, or joining at room temperature of two objects that require heating for their direct joining.

Optional combinations of the aforementioned constituting elements, and implementation of the present invention, including the expressions, in the form of methods or apparatuses may also be practiced as additional modes of the present invention. Also, the optional combinations of the aforementioned constituting elements also fall within the scope of the invention for which patent protection is sought by the subject patent application.

### ADVANTAGEOUS EFFECTS OF INVENTION

The present invention provides an improved technology for joining objects together.

### BRIEF DESCRIPTION OF DRAWINGS

An embodiment will now be described, by way of example only, with reference to the accompanying drawings which are meant to be exemplary, not limiting, and wherein like elements are numbered alike in several Figures, in which:
FIGS. 1 are diagrams that schematically illustrate the principle of joining in a joining method according to an embodiment;
FIG. 2 is a diagram that schematically illustrates a configuration of a rotating drum-type plasma irradiation device used in Examples;
FIGS. 3 are diagrams that schematically illustrate the principle of T-peel testing conducted to evaluate joining strength;
FIGS. 4 are diagrams that schematically illustrate the principle of tensile shear testing conducted to evaluate joining strength;
FIGS. 5 are diagrams that illustrate changes in water contact angle on object surfaces before and after plasma irradiation;
FIGS. 6 show measurement results of X-ray photoelectron spectroscopy of a PPS film before and after plasma irradiation;
FIG. 7 shows measurement results of X-ray photoelectron spectroscopy of an Al plate before and after plasma irradiation;
FIG. 8 shows scanning electron microscope images of the PPS film before and after plasma irradiation;
FIG. 9 shows relationships between the number of times of plasma irradiation and water contact angle;
FIG. 10 shows relationships between the number of times of plasma irradiation and joining strength;
FIG. 11 shows a measurement result of differential thermal analysis of the PPS film;
FIGS. 12 show measurement results of X-ray diffraction of the PPS film;
FIG. 13 shows relationships between joining temperature and joining strength;
FIGS. 14 show measurement results of X-ray photoelectron spectroscopy of a Cu plate before and after plasma irradiation;
FIG. 15 shows infrared absorption spectra of a surface of the Cu plate measured using attenuated total reflection;
FIGS. 16 are diagrams that illustrate changes in water contact angle on object surfaces before and after plasma irradiation;
FIG. 17 shows relationships between the number of times of plasma irradiation and water contact angle;
FIGS. 18 are diagrams that illustrate changes in water contact angle on object surfaces before and after plasma irradiation;
FIG. 19 shows scanning electron microscope images of a PC film before and after plasma irradiation;
FIG. 20 shows relationships between the number of times of plasma irradiation and water contact angle;
FIG. 21 shows relationships between the number of times of plasma irradiation and joining strength;
FIG. 22 shows measurement results of X-ray photoelectron spectroscopy of the PC film before and after plasma irradiation;
FIG. 23 shows changes in types of bonds on the PC film surface before and after plasma irradiation, calculated from the measurement results of X-ray photoelectron spectroscopy;
FIG. 24 shows calculation results of the numbers of functional groups introduced into object surfaces by plasma irradiation;
FIGS. 25 are diagrams that illustrate a change in water contact angle on an object surface before and after plasma irradiation;
FIGS. 26 show measurement results of X-ray photoelectron spectroscopy of a PA6 film before and after plasma irradiation;
FIG. 27 shows measurement results of sum-frequency generation spectroscopy of the PA6 film before and after plasma irradiation;
FIGS. 28 are diagrams that illustrate a change in water contact angle on an object surface before and after plasma irradiation;
FIGS. 29 show measurement results of X-ray photoelectron spectroscopy of a PP film before and after plasma irradiation;
FIGS. 30 show measurement results of X-ray photoelectron spectroscopy of a carbon fiber reinforced plastic containing PA6 as a base material before and after plasma irradiation;
FIG. 31 is a diagram that illustrates dimensions of a test piece used in single lap joint tensile testing;
FIG. 32 shows a result of single lap joint tensile testing of CF/PA6;
FIG. 33 shows a result of single lap joint tensile testing of CF/PA66;
FIG. 34 shows a result of single lap joint tensile testing of CF/PEEK;
FIG. 35 shows measurement results of shear stresses of joined objects;
FIG. 36 shows measurement results of shear stresses of joined objects; and
FIG. 37 is a diagram that schematically illustrates a configuration of a joined object in an Example.

### DESCRIPTION OF EMBODIMENT

An embodiment of the present invention relates to a technology for joining two objects together. More specifically, a joining surface of each of two objects to be joined is irradiated with plasma before the joining surfaces are bonded to each other at a temperature lower than the melting points of substances included in each object, thereby joining the two objects together.

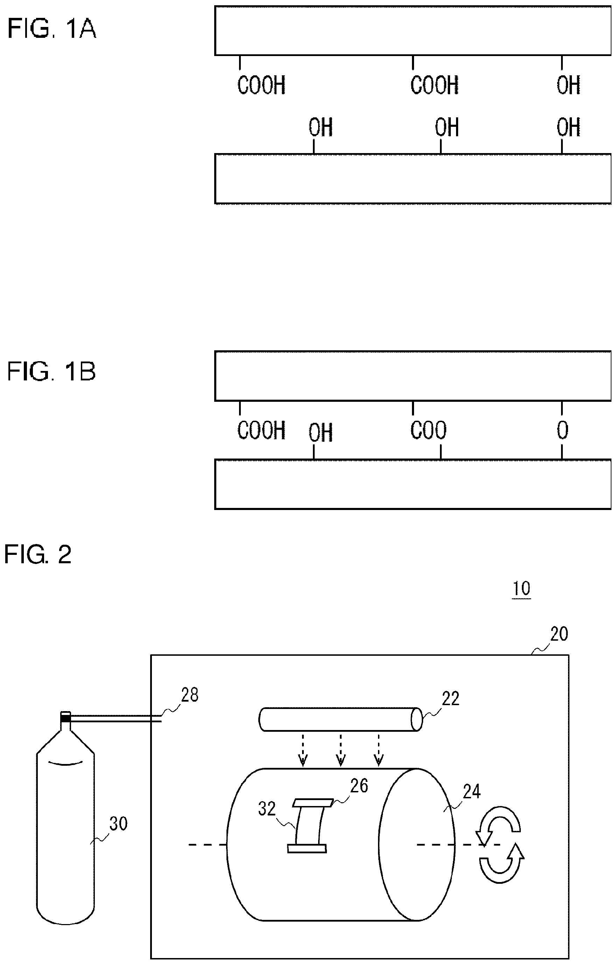

FIGS. 1 schematically illustrate the principle of joining in a joining method according to the embodiment. FIG. 1A schematically illustrates a state after the joining surface of each of two objects to be joined is irradiated with plasma. Through the plasma irradiation, functional groups, such as carboxy groups and hydroxy groups, are generated on the joining surface of each object. FIG. 1B schematically illustrates a state after the joining surfaces are bonded to each other. When the joining surfaces are bonded to each other, chemical bonds are made between functional groups positioned close to each other, so that the two objects are joined together by the chemical bonds thus made. In the case of FIGS. 1, an ester bond is made by dehydration condensation of a hydroxy group present on the joining surface of one object and a carboxy group present on the joining surface of the other object. Also, an ether bond is made by dehydration condensation of hydroxy groups present respectively on the joining surfaces of the two objects. Thus, the two objects are strongly joined by a number of covalent bonds. Although chemical bonds between functional groups may also be hydrogen bonds or van der Waals bonds, functional groups may desirably be bonded by covalent bonds, which are the strongest chemical bonds.

Thus, in the method of the present embodiment, two objects can be joined together without an adhesive. This eliminates the problems of deterioration of an adhesive and generation of volatile organic compounds. Also, since two objects can be joined together without bolts, drilling or other processing on the two objects is unnecessary. This eliminates the problem of reduced strength of the two objects. Further, since two objects can be joined together without heating them to the melting points or higher, the problem of deterioration of the two objects caused by heating can be eliminated.

For plasma irradiation on the joining surfaces of two objects, a plasma irradiation device employing an arbitrary plasma generating technology may be used. Although a drum-type plasma irradiation device is used in Examples described later, plasma irradiation devices of other types, such as a plate-type plasma irradiation device, may also be used.

Conditions for plasma irradiation on the joining surfaces of two objects may be selected based on the type of the plasma irradiation device, the types and sizes of the objects to be joined, required joining strength, states of the joining surfaces, and the like. As will be described later, plasma irradiation may suitably be performed at conditions such that the etching amount on each joining surface is less than a predetermined value, and a predetermined number or more of functional groups are generated on each joining surface. Specific conditions will be described later with reference to Examples.

The joining surfaces of two objects may be irradiated with plasma of an arbitrary substance. For example, plasma of a substance that is gaseous at ordinary temperatures, such as carbon dioxide, oxygen, nitrogen, water vapor, helium, neon, and argon, may be provided, or plasma of a mixture of two or more of such substances, such as air, may also be provided.

The types of functional groups generated on the joining surfaces of two objects may be selected based on the types and sizes of the objects to be joined, required joining strength, states of the joining surfaces, and the like. On each of the joining surfaces of the two objects, functional groups of the same type may be generated, or functional groups of different types may be generated. In the latter case, an appropriate combination of functional groups may suitably be selected based on the types and sizes of the objects to be joined, required joining strength, states of the joining surfaces, and the like. More specifically, the type of plasma to be provided or the type of a gas to be introduced at the time of pressure restoration may suitably be selected so as to generate, on each of the joining surfaces, functional groups that easily initiate chemical reactions when the joining surfaces are bonded to each other.

The objects that can be joined using the method of the present embodiment include resins, carbon fiber reinforced plastics (CFRP), metals, metal oxides, and glass. More specifically, the resins include polyethylene terephthalate (PET), polyamides (PA), polyimide (PI), polyphenylene sulfide (PPS), polypropylene (PP), polycarbonates (PC), polyether ether ketone (PEEK), polymethyl methacrylate (PMMA), polyetherimide (PEI), and epoxy resins, for example. The carbon fiber reinforced plastics include carbon fiber reinforced plastics containing polypropylene as a base material (CF/PP), carbon fiber reinforced plastics each containing a polyamide as a base material (CF/PA), carbon fiber reinforced plastics containing polyphenylene sulfide as a base material (CF/PPS), carbon fiber reinforced plastics containing polyethylene terephthalate as a base material (CF/PET), carbon fiber reinforced plastics each containing a polycarbonate as a base material (CF/PC), carbon fiber reinforced plastics containing polyether ether ketone as a base material (CF/PEEK), carbon fiber reinforced plastics containing polyetherimide as a base material (CF/PEI), and carbon fiber reinforced plastics each containing an epoxy resin as a base material (CF/epoxy), for example. The metals include aluminum (Al), copper (Cu), titanium (Ti), iron (Fe), and stainless steel (SUS), for example. The metal oxides include perovskite metal oxides, such as strontium titanate (STO) and lanthanum aluminate (LAO), and magnesium oxide (MgO), for example. Objects of the same type or different types may be joined together using the aforementioned method. Also, objects constituted by multiple substances or materials may be joined together using the aforementioned method.

Particularly, carbon fiber reinforced plastics are more lightweight than metals and have higher strength, so that wide applications thereof are expected in the fields of automobiles, aircrafts, and the like. With the method of the present embodiment, strong joining between carbon fiber reinforced plastics or between a carbon fiber reinforced plastic and a metal or a resin can be easily implemented, while the occurrence of the aforementioned problems can be prevented.

The shapes of objects to be joined may be arbitrary, as long as the joining surfaces of the objects have attachable shapes. For example, a combination of films, a film and a flat plate, flat plates, or curved surfaces may be joined.

With the method of the present embodiment, two objects can be joined together by strong covalent bonds, so that the method is also applicable in the fields where highly strong joining is required, such as components in transportation. Also, since high airtightness can be ensured in the joined part, the method is also applicable to a tank for storing hydrogen or a container of which the inside needs to be kept vacuum, for example. Further, since volatile organic compounds are not generated, the method is also applicable to joining in manufacture of micro channel chips used in the fields of medical testing, medicines, cell biological studies, and protein crystallization, for example.

With regard to PA, being absorbent of water could be a practical problem. However, by joining a PPS film or the like for preventing entry of water, to a surface of PA or a carbon fiber reinforced plastic containing PA as a base material, the water resistance can be improved. Also, by joining a fluororesin film to the surface, deterioration caused by ultraviolet light can be prevented, and the weathering resistance can be improved. Thus, even with a material having inferior water resistance or inferior weathering resistance, by joining, to a surface thereof, a film for improving the water resistance and weathering resistance, a product that can be used for a long period of time even in a harsh environment can be produced.

### Examples

The inventor has conducted experiments for joining various types of objects. In the following, details of the experiments will be described.

### Plasma Irradiation Device

FIG. 2 schematically illustrates a configuration of a rotating drum-type plasma irradiation device used in Examples. A rotating drum-type plasma irradiation device 10 includes a rotating drum 24 rotated by a motor or another drive mechanism, which is not illustrated, at a predetermined angular velocity, an electrode 22 used to cause electric discharge, a specimen holder 26 provided on a side surface of the rotating drum 24, a bell jar 20 in which the abovementioned configurations are arranged, a gas inlet 28 through which a process gas is introduced into the bell jar 20, and a cylinder 30 that supplies the process gas. A specimen 32 to be subjected to plasma treatment is placed in the specimen holder 26. After the bell jar 20 is depressurized to vacuum, the process gas is introduced into the bell jar 20. When a high voltage is supplied to the electrode 22, the process gas is brought into a plasma state by electric discharge to be provided to a surface of the specimen 32. The specimen 32 is rotated together with the rotating drum 24. When the rotating drum 24 is rotated twice or more, the surface of the specimen 32 is irradiated with plasma each time the specimen 32 passes through the irradiation range of plasma.

### T-peel Testing

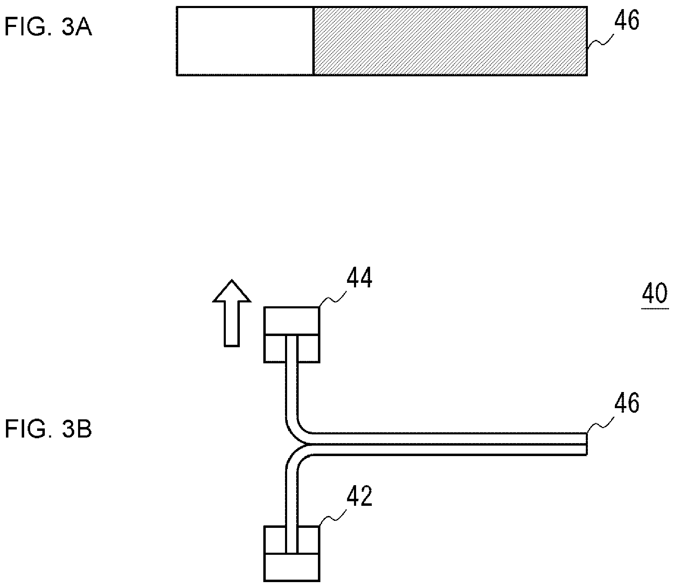

FIGS. 3 schematically illustrate the principle of T-peel testing conducted to evaluate joining strength. FIG. 3A illustrates an upper surface of a test piece 46 used in the T-peel testing. The test piece 46 is obtained by joining two objects cut into the same size, at diagonally shaded portions. The portions that are not diagonally shaded are not joined and are separated. FIG. 3B schematically illustrates a T-peel test device 40. One of the separated portions of the test piece 46 was attached to a gripper 42, and the other of the separated portions was attached to a movable gripper 44. While the gripper 42 was fixed, the movable gripper 44 was moved at a speed of 10 mm per minute, and the peeling distance and the force applied to the gripper were recorded.

### Tensile Shear Testing

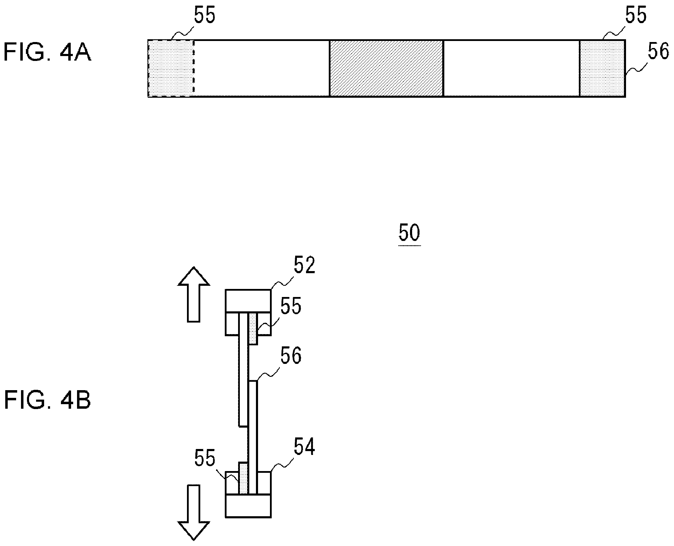

FIGS. 4 schematically illustrate the principle of tensile shear testing conducted to evaluate joining strength. FIG. 4A illustrates an upper surface of a test piece 56 used in the tensile shear testing. The test piece 56 is obtained by joining, at diagonally shaded portions, two objects cut into the same size and overlapped each other with a shift in a longer side direction. To each end of the joined object, a tab 55 is attached with an adhesive to reinforce the portion to be gripped by a gripper. FIG. 4B schematically illustrates a tensile shear test device 50. The tab 55 at one end of the two objects as the test piece 56 was gripped by a gripper 52, and the tab 55 at the other end was gripped by a gripper 54. The grippers 52 and 54 were moved at a constant speed (0.05 mm/minute, 1.0 mm/minute, or 2.0 mm/minute), and the maximum value of the force at break was recorded as the breaking force of the test piece 56. The shear stress was calculated by dividing the breaking force by the shear area.

### Example 1

To confirm the principle of joining in the joining method according to the present embodiment, experiments for joining a PPS film and an Al flat plate were conducted. A PPS film and an Al plate were cut to prepare test pieces, and surfaces of the test pieces were cleaned with ethanol. The joining surface of each of the two test pieces was irradiated with plasma by the drum-type plasma irradiation device. Thereafter, the joining surfaces are bonded to each other to join the Al plate and the PPS film together by means of a vacuum press, and the tensile shear stress of the joined object was measured. Table 1 shows the experiment conditions.

**Table 1**

| PLASMA IRRADIATION CONDITIONS | |
|---|---|
| ATMOSPHERE | CO₂ (15Pa) |
| PLASMA IRRADIATION VOLTAGE | 2kV, 3kV |
| NUMBER OF DRUM ROTATIONS | 1-3 TIMES |
| DRUM ROTATION SPEED | 1.7 TIMES PER MINUTE |

| JOINING CONDITIONS | |
|---|---|
| PRESSURE | 2 - 50MPa |
| TEMPERATURE | 25 - 220°C |
| TIME | 5-10 MINUTES |

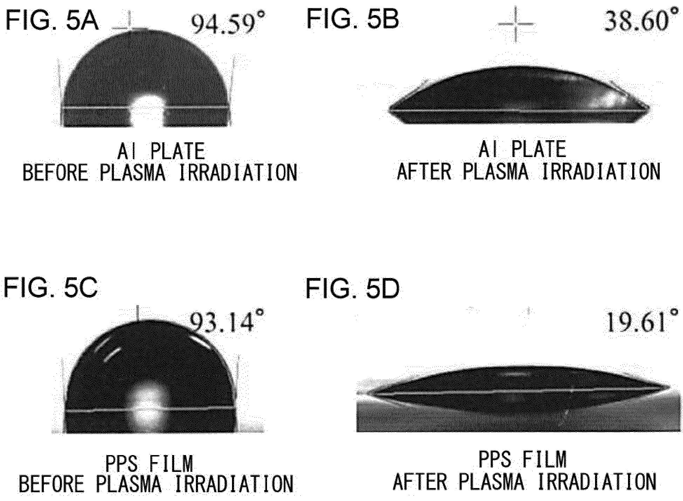

FIGS. 5 illustrate changes in water contact angle on object surfaces before and after plasma irradiation. The water contact angle on an Al plate surface before plasma irradiation was 94.59 degrees, as shown in FIG. 5A, whereas the water contact angle on the Al plate surface after plasma irradiation was 38.60 degrees, as shown in FIG. 5B. Also, the water contact angle on a PPS film surface before plasma irradiation was 93.14 degrees, as shown in FIG. 5C, whereas the water contact angle on the PPS film surface after plasma irradiation was 19.61 degrees, as shown in FIG. 5D. Thus, the water contact angle on each of the Al plate surface and the PPS film surface was significantly made smaller by plasma irradiation.

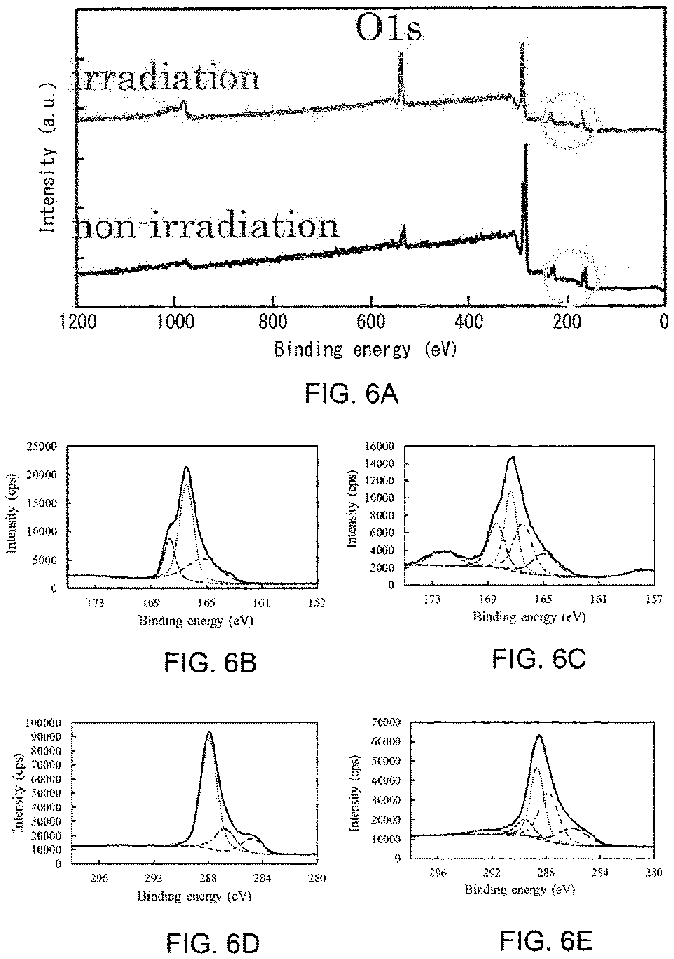

FIGS. 6 show measurement results of X-ray photoelectron spectroscopy (XPS) of the PPS film before and after plasma irradiation. As shown in FIG. 6A, in the X-ray photoelectron spectrum of the PPS film after plasma irradiation, the O1s peak strength is increased compared to before plasma irradiation. This suggests that O was increased on the PPS film surface by plasma irradiation. Also, as shown in FIGS. 6B and 6C, which are spectra in FIG. 6A magnified around 150-170 eV, and in FIGS. 6D and 6E, which are spectra in FIG. 6A magnified around 280-300 eV, in the X-ray photoelectron spectrum after plasma irradiation, the S2p peak strength and the C1s peak strength are changed. This suggests that the hydroxy groups were increased and the sulfonyl groups were generated on the PPS film surface by plasma irradiation.

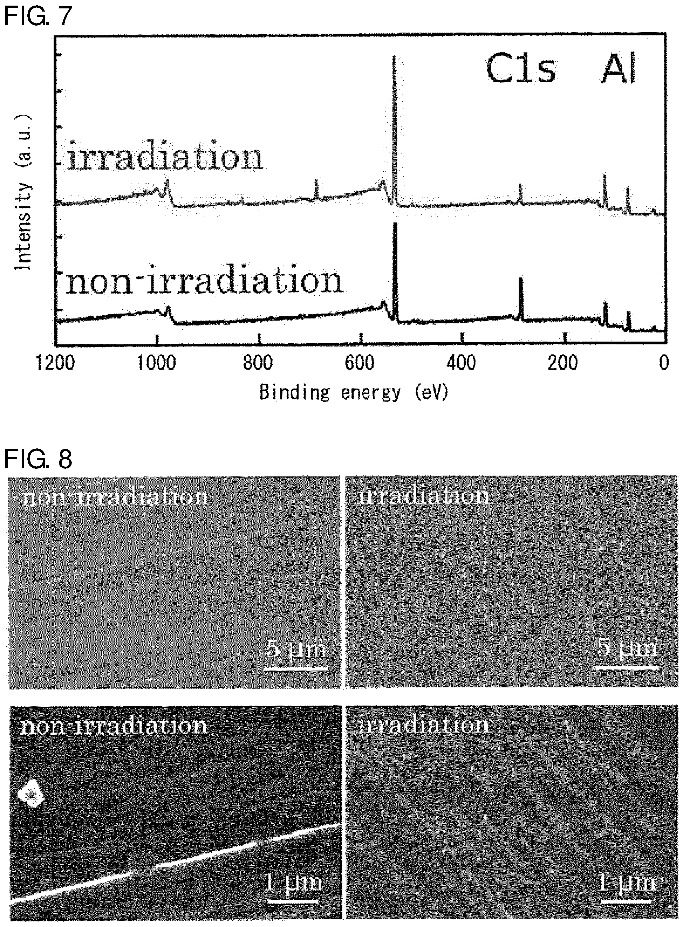

FIG. 7 shows measurement results of X-ray photoelectron spectroscopy of the Al plate before and after plasma irradiation. As shown in FIG. 7, in the X-ray photoelectron spectrum of the Al plate after plasma irradiation, the C1s peak strength is decreased and the strength of each Al-related peak is increased compared to before plasma irradiation. This suggests that organic substances on the Al plate surface were removed and the oxide layer was exposed.

FIG. 8 shows scanning electron microscope (SEM) images of the PPS film before and after plasma irradiation. When the images before and after plasma irradiation are compared, it is found that organic substances attached to the PPS film surface were removed. On the PPS film surface, etching caused by plasma irradiation was not found.

Thus, the measurement results of the water contact angle on a surface, XPS, and SEM of the PPS film and the Al plate before and after plasma irradiation suggest that, with regard to a resin, organic substances attached to the resin surface were removed and hydrophilic functional groups were generated by plasma irradiation. The measurement results also suggest that, with regard to a metal, organic substances attached to the metal surface were removed and an oxide layer was exposed.

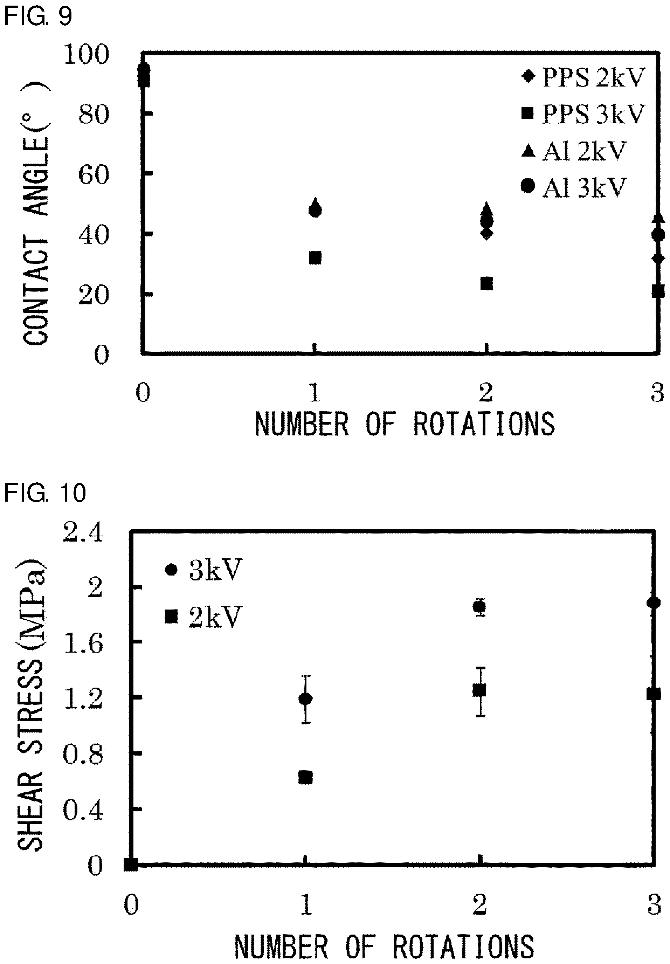

FIG. 9 shows relationships between the number of times of plasma irradiation and water contact angle. With regard to both the Al plate and the PPS film, when the number of times of plasma irradiation was larger, the contact angle became smaller. However, compared to before plasma irradiation, the contact angle became sufficiently small after the first plasma irradiation, and reduction in contact angle after the second plasma irradiation was insignificant. In the case of the PPS film, when the plasma irradiation voltage was set to 3 kV, the contact angle was smaller than that when the plasma irradiation voltage was set to 2 kV. In the case of the Al plate, however, the contact angle was almost the same at the both plasma irradiation voltages of 3 kV and 2 kV.

FIG. 10 shows relationships between the number of times of plasma irradiation and joining strength. At the both plasma irradiation voltages of 2 kV and 3 kV, the shear stress after the second plasma irradiation was greater than the shear stress after the first plasma irradiation. However, the shear stress after the second plasma irradiation and the shear stress after the third plasma irradiation were almost the same.

Thus, such correlation between the water contact angle on the joining surface and the joining strength suggests that covalent bonds, hydrogen bonds, and van der Waals bonds were formed between hydrophilic functional groups by chemical reactions.

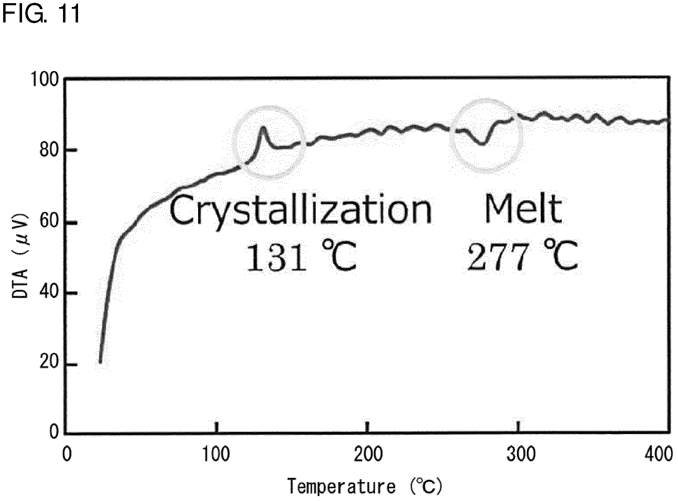

FIG. 11 shows a measurement result of differential thermal analysis (DTA) of the PPS film. An exothermic peak due to crystallization is seen around 131 degrees C, and an endothermic peak due to melt is seen around 277 degrees C.

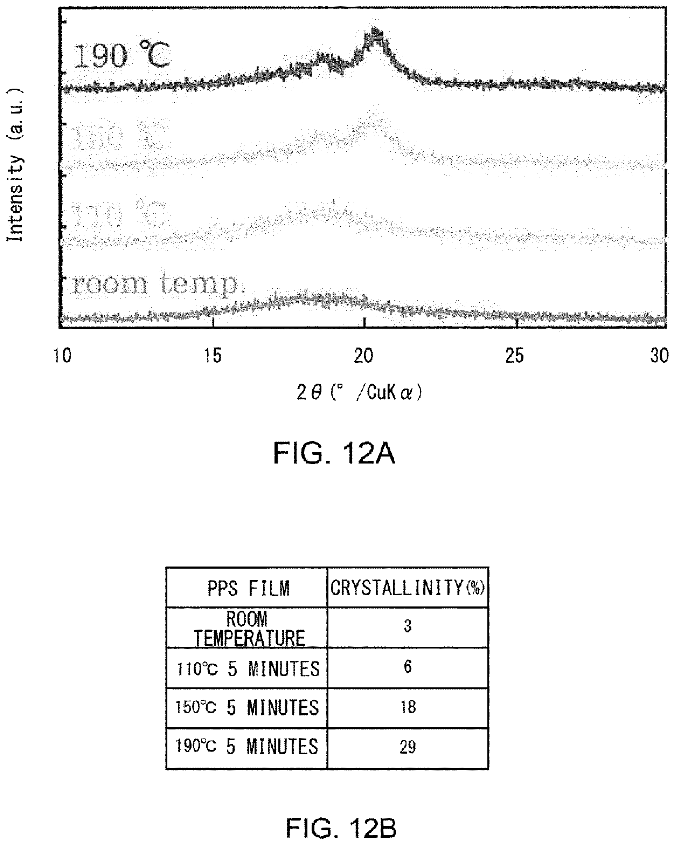

FIGS. 12 show measurement results of X-ray diffraction (XRD) of the PPS film. FIG. 12A shows X-ray diffraction data, and FIG. 12B shows crystallinity of PPS in the PPS film calculated based on the X-ray diffraction data. When the temperature is heated to the temperature at which the exothermic peak due to crystallization is seen in DTA or higher, recrystallization of PPS proceeds, so that the crystallinity is increased.

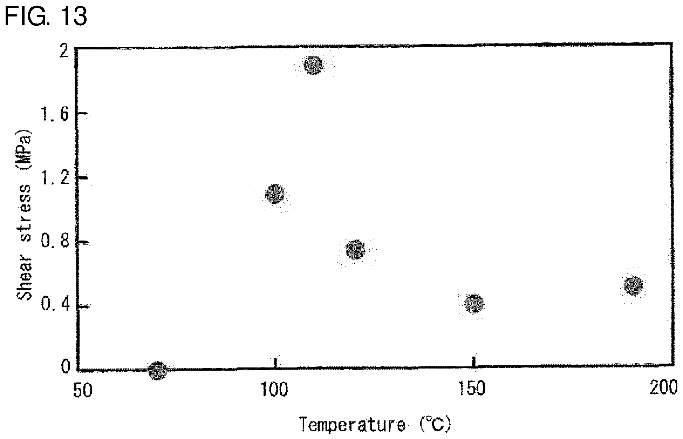

FIG. 13 shows relationships between joining temperature and joining strength. It can be seen that the joining strength is improved as the joining temperature at which the PPS film and the Al plate are joined is raised, and the joining strength becomes maximum around 110 degrees C. However, when the joining temperature is further raised, the joining strength is lowered instead. This is thought to be caused by recrystallization of PPS in the PPS film.

Thus, the measurement results of DTA and XRD of the PPS film and the correlations between the joining temperature and the joining strength of the PPS film and the Al plate suggest that greater joining strength can be obtained by joining two objects at a temperature that is higher than a temperature at which chemical reactions sufficiently proceed between functional groups on the respective surfaces of the objects with energy exceeding the activation energy of the chemical reactions, and that is lower than the crystallization temperature of a resin.

Meanwhile, it was confirmed that, as is the case with the Al plate, the water contact angle on a SUS plate surface was also made smaller by plasma irradiation. This is also thought to be because organic substances attached to the surface were removed by plasma irradiation and an oxide layer was exposed. Further, SEM images of surfaces of a SUS plate and a Ti plate after plasma irradiation were captured, and it was confirmed that etching caused by plasma irradiation was not found on the surfaces.

### Example 2

Experiments for joining a PPS film and a Cu flat plate were conducted in the same way as described in Example 1. The experiment conditions were the same as those in Table 1. The PPS film and the Cu plate were able to be strongly joined when they were joined together at 110 degrees C, as is the case with the PPS film and Al plate.

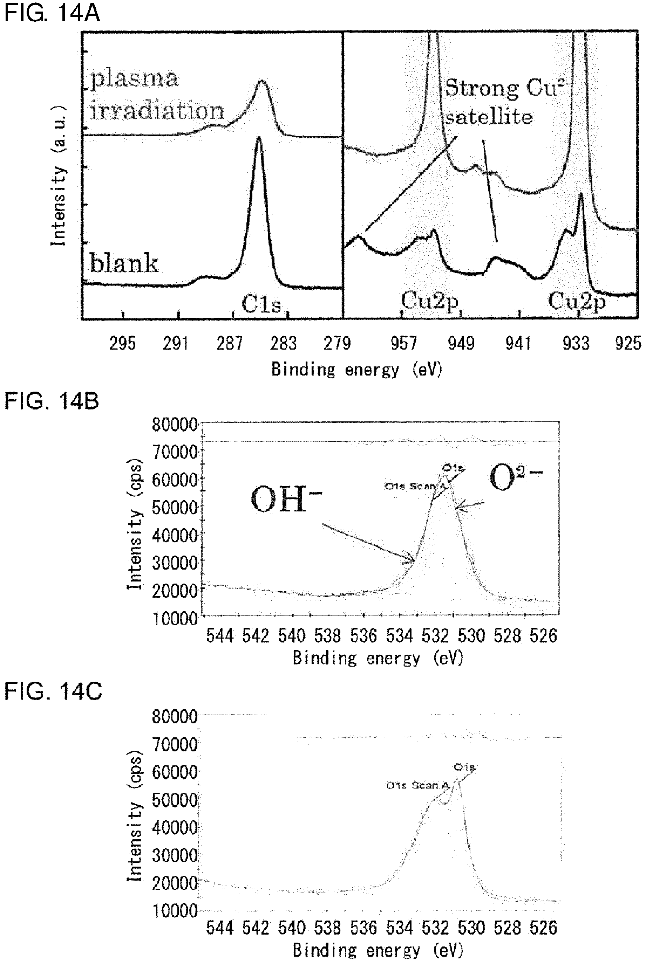

FIGS. 14 show measurement results of X-ray photoelectron spectroscopy of the Cu plate before and after plasma irradiation. As shown in FIG. 14A, in the X-ray photoelectron spectrum of the Cu plate after plasma irradiation, the C1s peak strength is decreased compared to before plasma irradiation. This suggests that organic substances on the Cu plate surface were removed by plasma irradiation. Also, the change in strength of each Cu2p peak before and after plasma irradiation suggests that Cu²⁺ was reduced to Cu⁺ by plasma irradiation. Further, FIG. 14B, which shows the O1s peak before plasma irradiation, and FIG. 14C, which shows the O1s peak after plasma irradiation, suggest that OH⁻ was decreased and O²⁻ was increased by plasma irradiation, which also suggests that Cu²⁺ was reduced to Cu⁺.

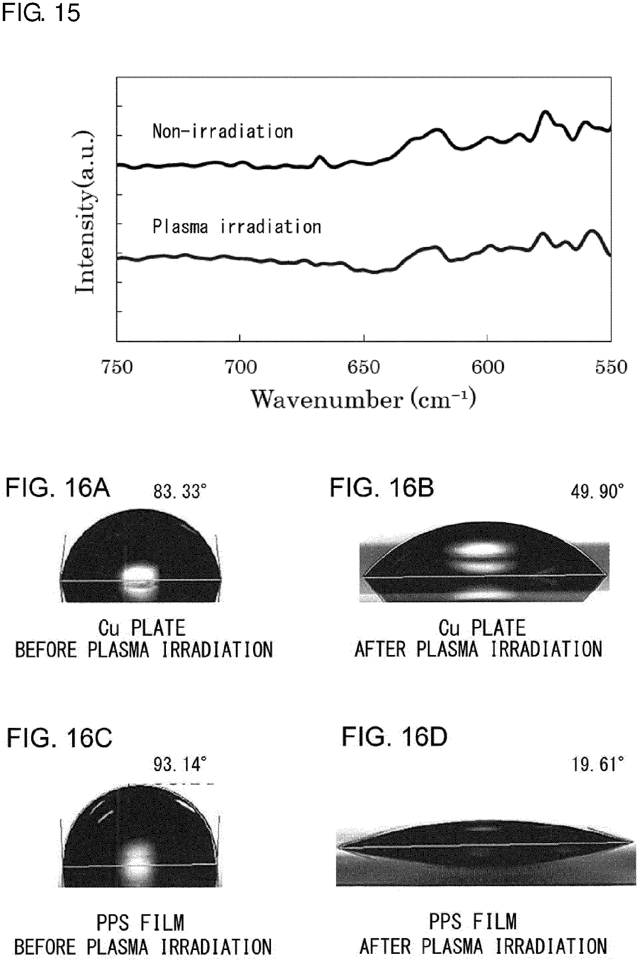

FIG. 15 shows infrared absorption spectra of a surface of the Cu plate measured using attenuated total reflection (ATR). There is little change between the ATR spectra before and after plasma irradiation, obtained with the penetration depth of about several micrometers.

Thus, based on the measurement results of XPS spectra and ATR spectra, it is considered that the CuO layer of about several nanometers on the Cu plate surface was changed to Cu₂O by plasma irradiation.

FIGS. 16 illustrate changes in water contact angle on object surfaces before and after plasma irradiation. The water contact angle on a Cu plate surface before plasma irradiation was 83.33 degrees, as shown in FIG. 16A, whereas the water contact angle on the Cu plate surface after plasma irradiation was 49.90 degrees, as shown in FIG. 16B. Thus, as is the case with the Al plate shown in FIGS. 5, the water contact angle on the Cu plate surface was also significantly made smaller by plasma irradiation. This suggests that organic substances attached to the surface were removed by plasma irradiation and an oxide layer was exposed.

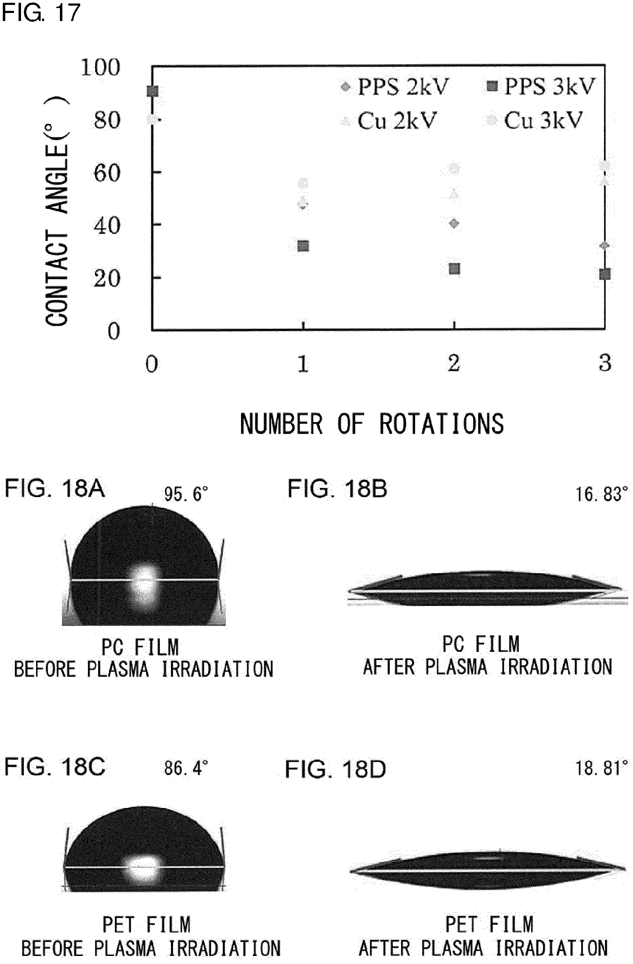

FIG. 17 shows relationships between the number of times of plasma irradiation and water contact angle. Unlike the case of the Al plate or PPS film, in the case of the Cu plate, the contact angle after the second or subsequent plasma irradiation was greater than the contact angle after the first plasma irradiation. Also in consideration of the XPS results, it is considered that Cu²⁺ was reduced by plasma irradiation and changed to Cu⁺.

Based on the experiment results above, it is considered that, when a Cu plate and a PPS film are joined together, plasma irradiation on the Cu plate surface changes a CuO layer of about several nanometers to Cu₂O, and joining with the PPS film changes Cu₂O to CuO through chemical reactions with O atoms present on the PPS film surface, so that the Cu plate and the PPS film are joined together.

Thus, the oxidation states and electronic states of metal atoms present on a metal plate surface can be changed depending on the plasma irradiation conditions. Accordingly, a metal can be easily and strongly joined with another object by appropriately controlling the oxidation state and the electronic state of the metal based on the type of the object to be joined, the types and amounts of functional groups introduced into the surface of the object to be joined, the joining temperature, and the joining time, for example.

### Example 3

Experiments for joining a PC film and a PET film were conducted in the same way as described in Example 1. The experiment conditions were the same as those in Table 1. The combination of the PC film and PET film were able to be strongly joined both at 25 degrees C and at 100 degrees C.

FIGS. 18 illustrate changes in water contact angle on object surfaces before and after plasma irradiation. The water contact angle on a PC film surface before plasma irradiation was 95.6 degrees, as shown in FIG. 18A, whereas the water contact angle on the PC film surface after plasma irradiation was performed for two rotations was 16.83 degrees, as shown in FIG. 18B. Also, the water contact angle on a PET film surface before plasma irradiation was 86.4 degrees, as shown in FIG. 18C, whereas the water contact angle on the PET film surface after plasma irradiation was performed for two rotations was 18.81 degrees, as shown in FIG. 18D. Thus, the water contact angle on each of the PC film surface and the PET film surface was significantly made smaller by plasma irradiation.

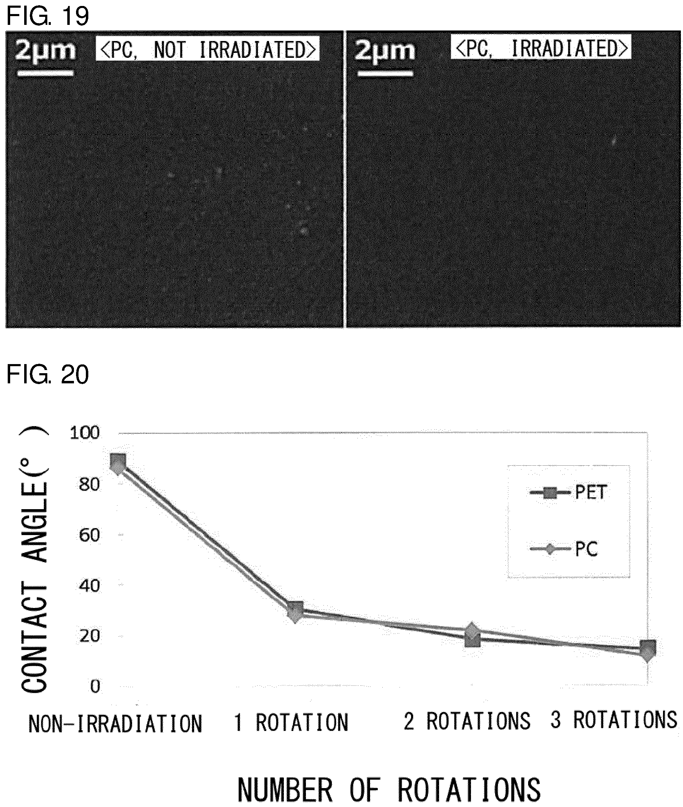

FIG. 19 shows scanning electron microscope images of the PC film before and after plasma irradiation. When the images before and after plasma irradiation are compared, it is found that organic substances attached to the PC film surface were removed. On the PC film surface, etching caused by plasma irradiation was not found.

FIG. 20 shows relationships between the number of times of plasma irradiation and water contact angle. With regard to both the PC film and the PET film, when the number of times of plasma irradiation was larger, the water contact angle became smaller.

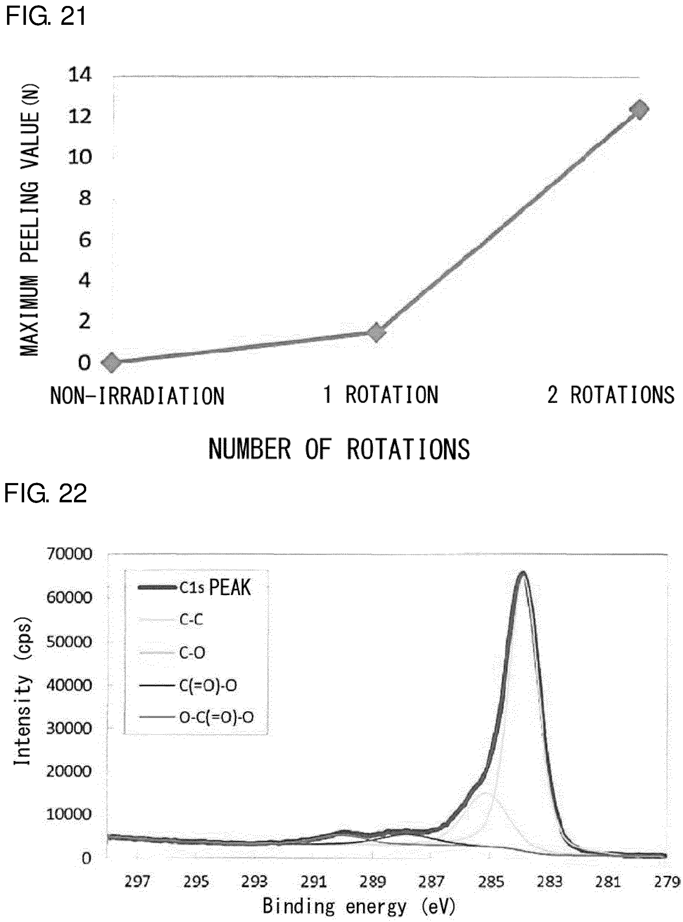

FIG. 21 shows relationships between the number of times of plasma irradiation and joining strength. When plasma irradiation was not performed, the PC film and the PET film were not joined. However, after plasma irradiation was performed for one rotation, the PC film and the PET film were joined together, and, after plasma irradiation was performed for two rotations, the peeling strength was further increased.

Thus, such correlation between the water contact angle on the joining surface and the joining strength suggests that covalent bonds, hydrogen bonds, and van der Waals bonds were formed between hydrophilic functional groups by chemical reactions.

FIG. 22 shows measurement results of X-ray photoelectron spectroscopy of the PC film before and after plasma irradiation. As shown in FIG. 22, in the X-ray photoelectron spectra of the PC film after plasma irradiation, the C1s peak strength is changed. This suggests that the bonding state of C on the PC film surface was changed by plasma irradiation.

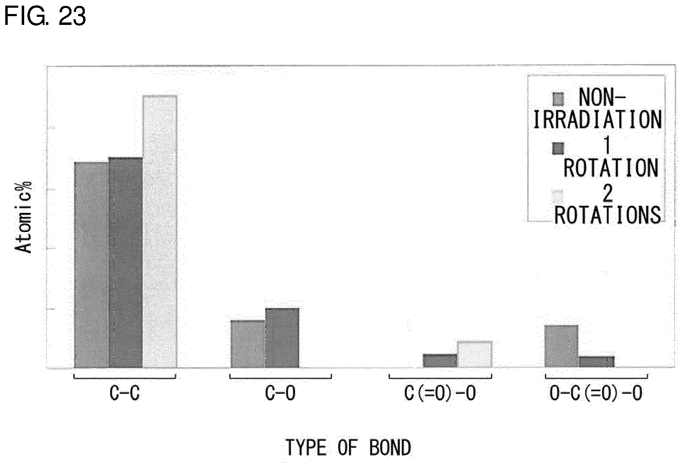

FIG. 23 shows changes in types of bonds on the PC film surface before and after plasma irradiation, calculated from the measurement results of X-ray photoelectron spectroscopy. FIG. 23 suggests that, after plasma irradiation, the carbonate groups were decreased and the carboxy groups were increased on the PC film surface.

Thus, the measurement results of the water contact angle on a surface, XPS, and SEM of the PC film and the PET film before and after plasma irradiation suggest that, with regard to each of the PC film and the PET film, organic substances attached to the film surface were removed and hydrophilic functional groups were generated by plasma irradiation. Particularly, with regard to the PC film, it is suggested that the carboxy groups were generated on the film surface by plasma irradiation. Accordingly, it is suggested that the strong joining between the PC film and the PET film is enabled by ester bonds between the carboxy groups generated on the PC film by plasma irradiation and the hydroxy groups exposed or generated on the PET film surface by plasma irradiation.

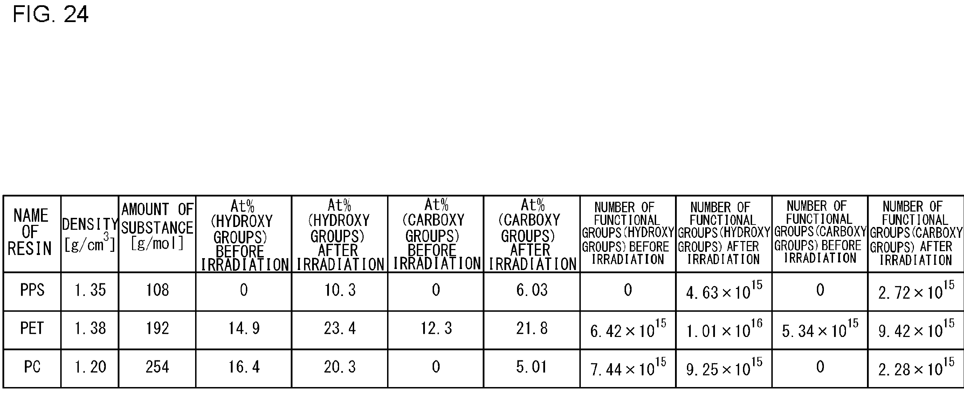

FIG. 24 shows calculation results of the numbers of functional groups introduced into object surfaces by plasma irradiation. The atomic percentage composition was calculated from peak areas in XPS, and, from the atomic percentage composition, the number of hydroxy groups and the number of carboxy groups included in a volume of 1 cm x 1 cm x 10 nm on the outermost surface were calculated. It is speculated that more functional groups are present closer to the surface, instead of the functional groups being evenly present in a depth direction. On a surface of each of the resins of PPS, PET, and PC, the hydroxy groups and the carboxy groups were generated after plasma irradiation. Each of these resins can be joined with another object of the same type or a different type using the method according to the present embodiment, as will be described later in Example 7. Therefore, it is found that each of the resins can be joined with another object using the method according to the present embodiment by irradiating the joining surface with plasma so that functional groups of which the numbers are shown in FIG. 24 are generated on the joining surface.

### Example 4

A PA6 film was irradiated with plasma to conduct experiments for observing changes in film surface state.

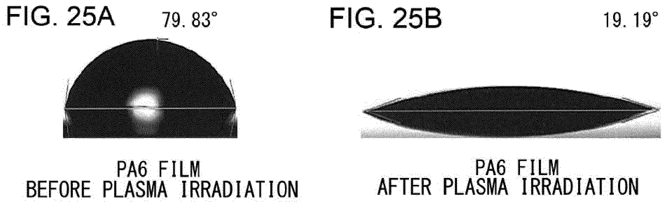

FIGS. 25 illustrate a change in water contact angle on an object surface before and after plasma irradiation. The water contact angle on a PA6 film surface before plasma irradiation was 79.83 degrees, as shown in FIG. 25A, whereas the water contact angle on the PA6 film surface after plasma irradiation was 19.19 degrees, as shown in FIG. 25B. Thus, the water contact angle on the PA6 film surface was also significantly made smaller by plasma irradiation.

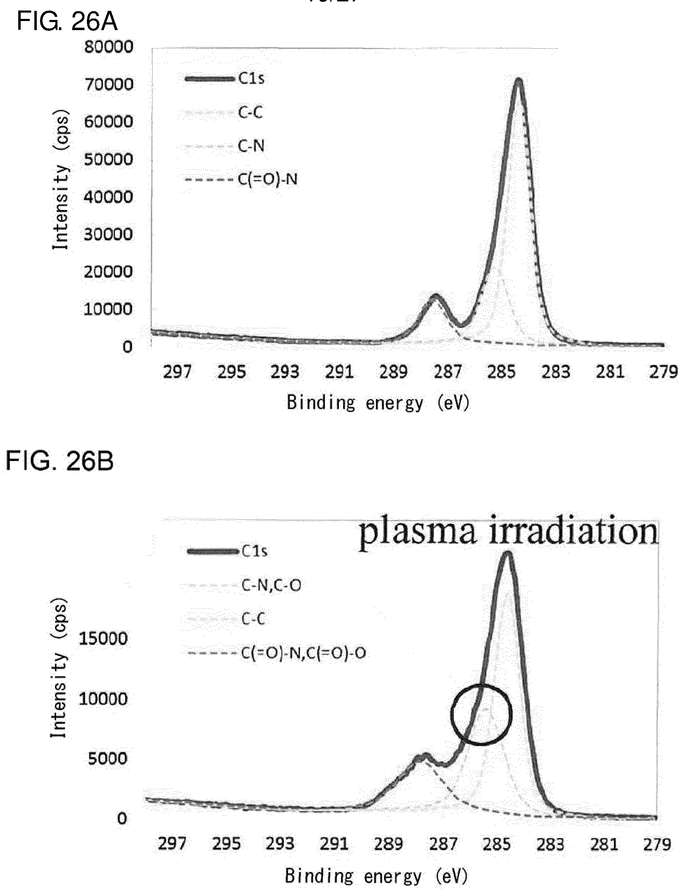

FIGS. 26 show measurement results of X-ray photoelectron spectroscopy of the PA6 film before and after plasma irradiation. FIG. 26A shows the X-ray photoelectron spectra of the PA6 film before plasma irradiation, and FIG. 26B shows the X-ray photoelectron spectra of the PA6 film after plasma irradiation. In the X-ray photoelectron spectra of the PA6 film after plasma irradiation, the C1s peak strength is changed, and the C-N or C-O peak and the C(=O)-N or C(=O)-O peak in the C1s peak are increased. Accordingly, it is considered that functional groups containing such bonds were generated on the surface, so that the water contact angle became smaller.

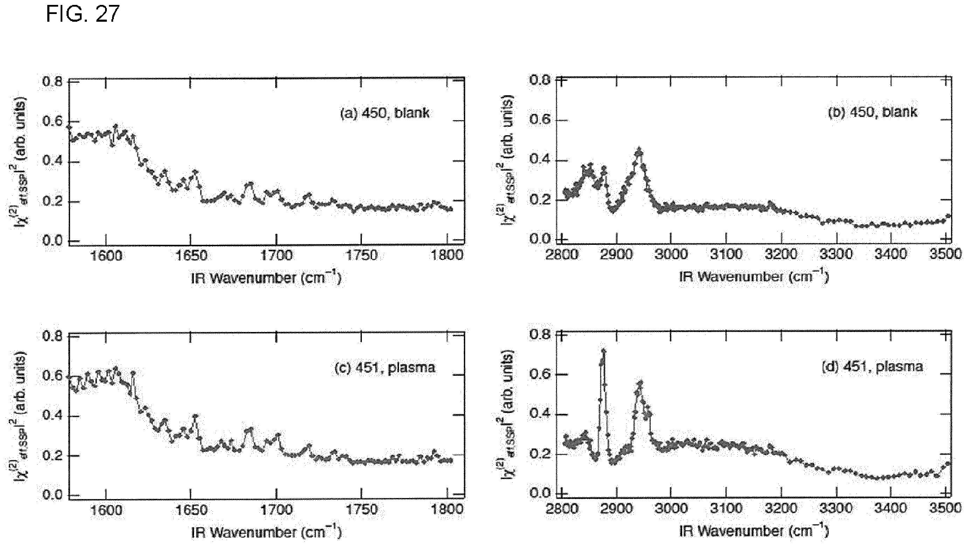

FIG. 27 shows measurement results of sum-frequency generation (SFG) spectroscopy of the PA6 film before and after plasma irradiation. In the wavenumber range of 2800-3000 cm⁻¹, the band strength at 2877 cm⁻¹ is increased by plasma irradiation. Also in consideration of the experiment results of the water contact angle, it is suggested that methylene chains in PA6 were changed to radicals by plasma irradiation.

Based on the experiment results above, it is suggested that plasma irradiation on a PA6 film surface generates functional groups containing C-N or C-O and functional groups containing C(=O)-N or C(=O)-O on the surface and changes methylene chains to radicals, so that such functional groups and radicals form chemical bonds with atoms or functional groups present on a surface of another object to be joined.

### Example 5

A PP film was irradiated with plasma to conduct experiments for observing changes in film surface state.

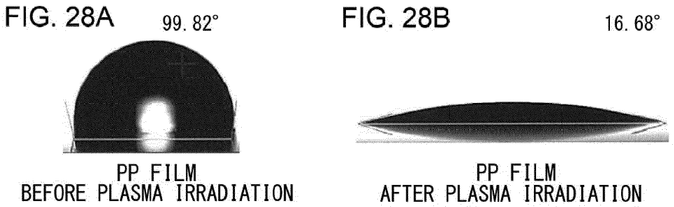

FIGS. 28 illustrate a change in water contact angle on an object surface before and after plasma irradiation. The water contact angle on a PP film surface before plasma irradiation was 99.82 degrees, as shown in FIG. 28A, whereas the water contact angle on the PP film surface after plasma irradiation was 16.68 degrees, as shown in FIG. 28B. Thus, the water contact angle on the PP film surface was also significantly made smaller by plasma irradiation.

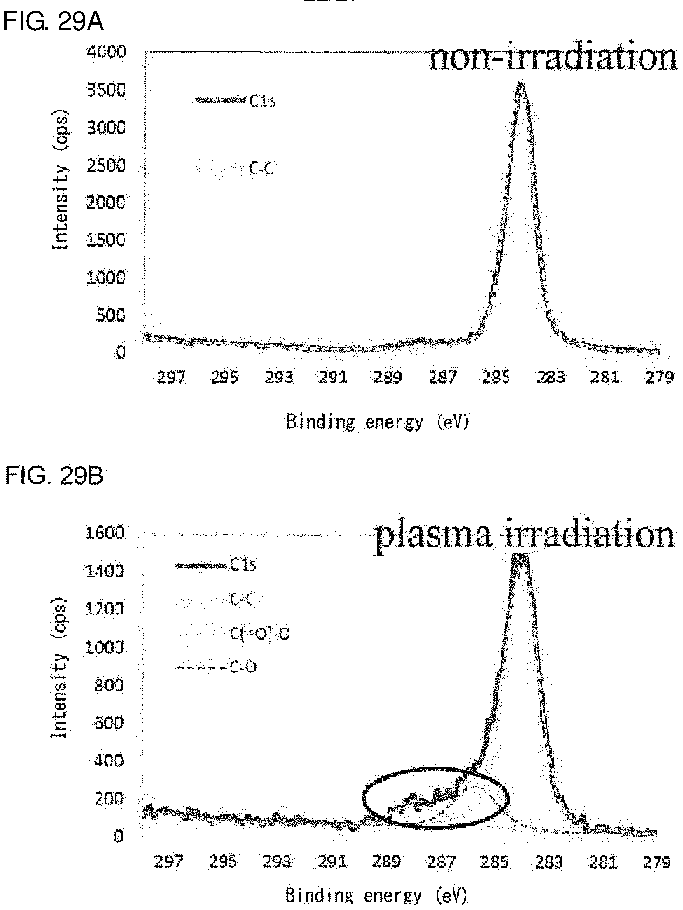

FIGS. 29 show measurement results of X-ray photoelectron spectroscopy of the PP film before and after plasma irradiation. FIG. 29A shows the X-ray photoelectron spectra of the PP film before plasma irradiation, and FIG. 29B shows the X-ray photoelectron spectra of the PP film after plasma irradiation. In the X-ray photoelectron spectra of the PP film after plasma irradiation, the C1s peak strength is changed, and the C-O peak and the C(=O)-O peak in the C1s peak are increased. Accordingly, it is considered that functional groups containing such bonds were generated on the surface, so that the water contact angle became smaller.

Based on the experiment results above, it is suggested that plasma irradiation on a PP film surface generates functional groups containing C-O and functional groups containing C(=O)-O on the surface, so that such functional groups form chemical bonds with atoms or functional groups present on a surface of another object to be joined.

### Example 6

Experiments for joining carbon fiber reinforced plastics together were conducted.

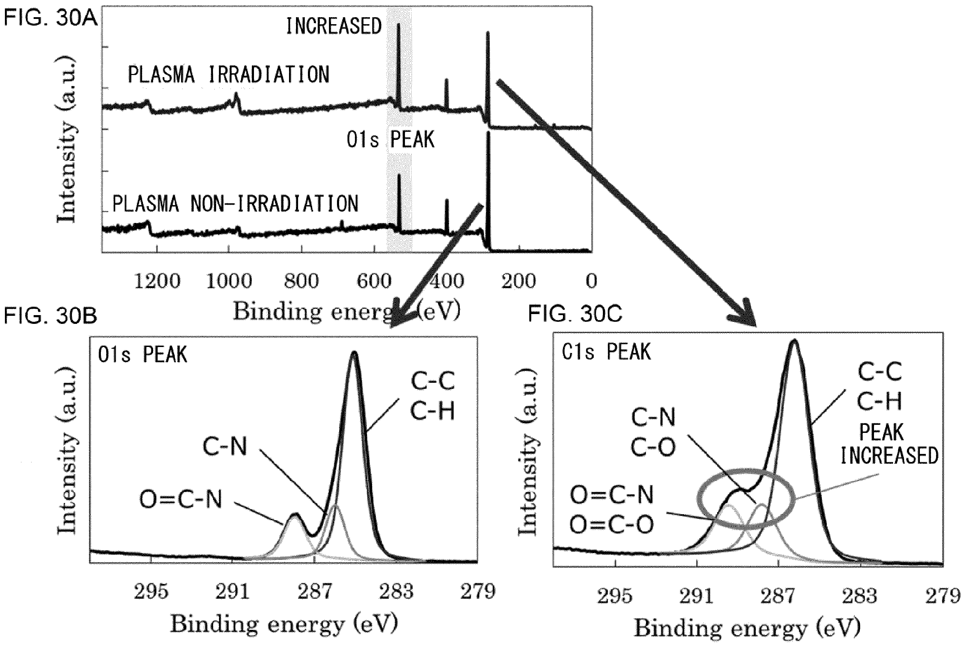

FIGS. 30 show measurement results of X-ray photoelectron spectroscopy of a carbon fiber reinforced plastic containing PA6 as a base material (CF/PA6) before and after plasma irradiation. FIG. 30A shows the X-ray photoelectron spectra of CF/PA6 before plasma irradiation, and FIG. 30B shows the X-ray photoelectron spectra of CF/PA6 after plasma irradiation. In the X-ray photoelectron spectra of CF/PA6 after plasma irradiation, the C1s peak strength is changed, and the C-N or C-O peak and the C(=O)-N or C(=O)-O peak in the C1s peak are increased. Accordingly, it is suggested that functional groups containing such bonds were generated on the surface.

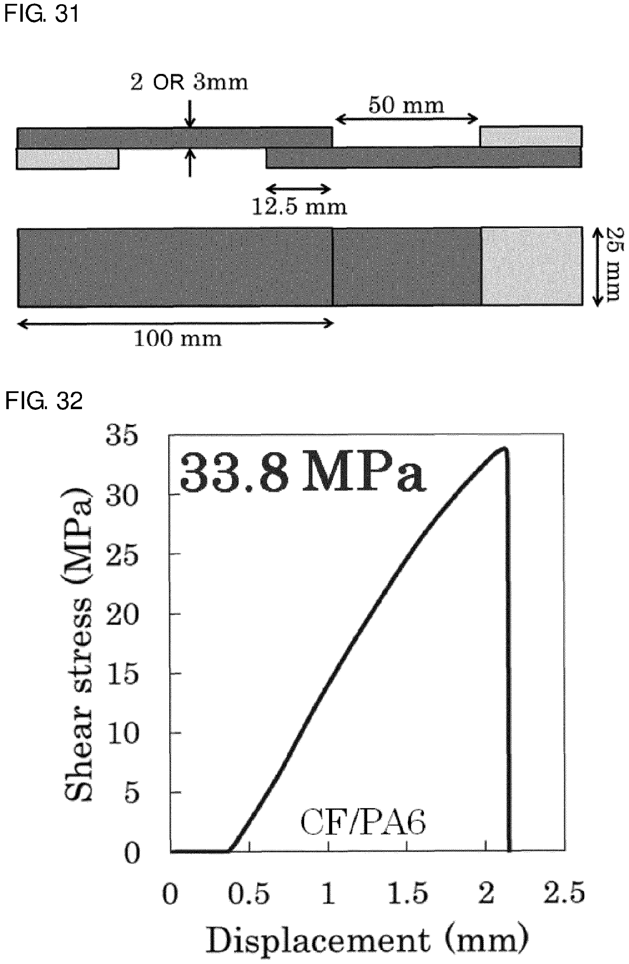

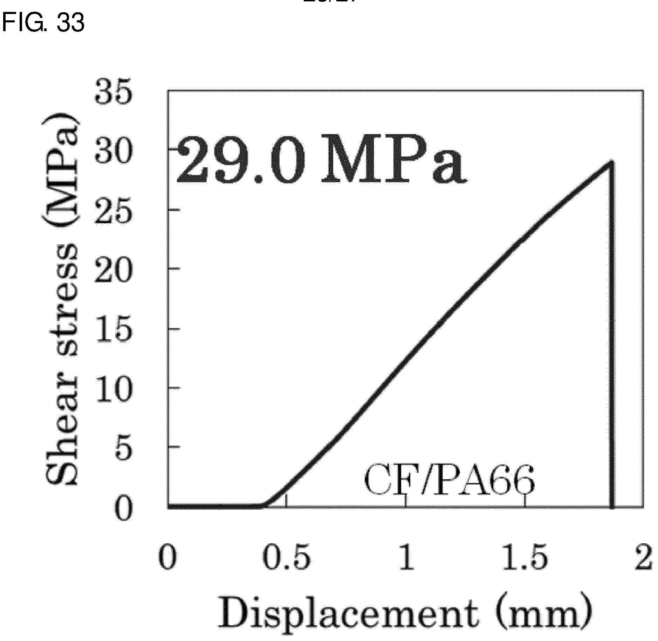

FIG. 31 illustrates dimensions of a test piece used in tensile testing. A test piece of each of a carbon fiber reinforced plastic containing PA6 as a base material (CF/PA6), a carbon fiber reinforced plastic containing PA66 as a base material (CF/PA66), and a carbon fiber reinforced plastic containing PEEK as a base material (CF/PEEK) was prepared as illustrated in FIG. 31 such as to conform to the Japanese Industrial Standards (JIS). Surfaces of each test piece were irradiated with plasma to be joined, and the test piece was then subjected to single lap joint tensile testing. FIGS. 32-34 show the test results.

The joining strength between such CFRTPs is found to be closer to 38 MPa at ordinary temperatures provided by "U.S. Federal Standard MMM-A-132-A-Type 1, Class 1", which stipulates requirement specifications for adhesives for use in metal to metal bonding in airframe parts and which is regarded as the world's strictest specifications in terms of safety. This means that components of aircrafts or other movable bodies can be made of CFRTPs, for example. With regard to CF/PA6 and CF/PEEK, the test results thereof are the world's highest values in single lap joint tensile testing for joining between carbon fiber reinforced plastics.

### Example 7

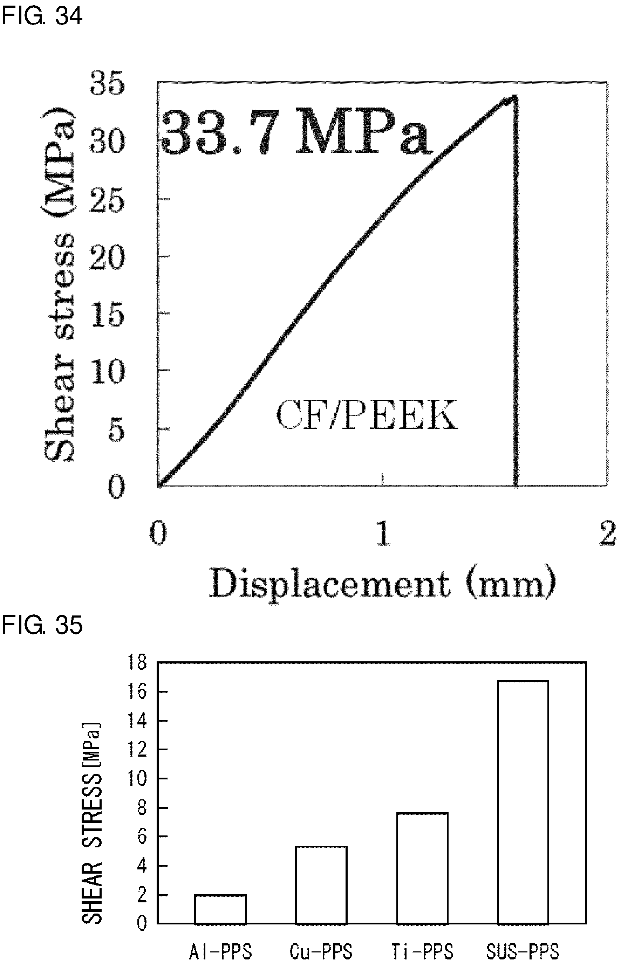

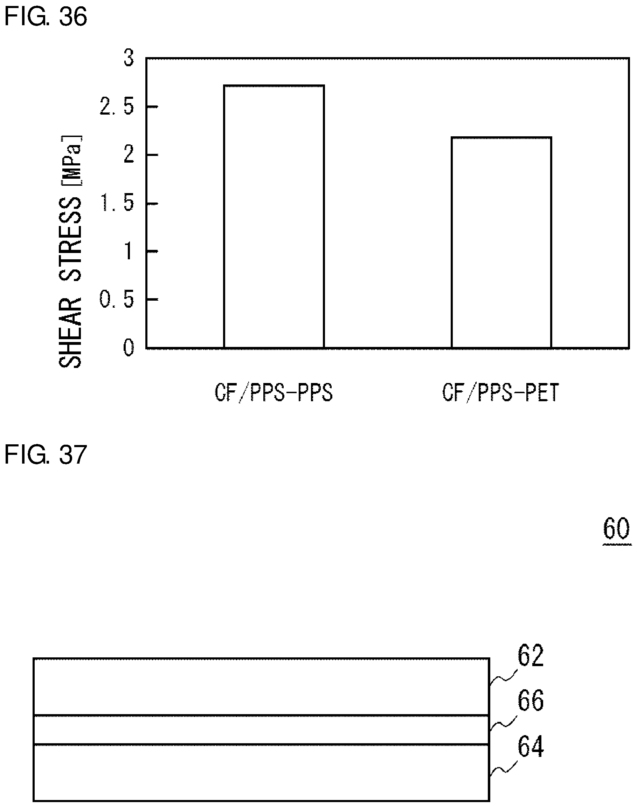

Objects such as resins, metals, carbon fiber reinforced plastics, metal oxides, and glass were joined together in various combinations. Table 2 shows the experiment conditions. In Table 2, the "melting point" means a melting point of a substance that constitutes a surface of an object to be joined. When objects of different types are joined together, the "melting point" means a lower melting point of the substances. The joining strength was evaluated by measuring the tensile shear stress with regard to parts of the combinations, and by conducting T-peel testing or by pulling the test pieces by hand with regard to the other parts of the combinations. FIGS. 35 and 36 and Tables 3-8 show the results.

**Table 2**

| | | USING PPS FILM | NOT USING PPS FILM |
|---|---|---|---|
| PLASMA IRRADIATION CONDITIONS | PLASMA IRRADIATION VOLTAGE | 1.5- 3.5[kV] | 1. 5- 3. 5[kV] |
| | NUMBER OF DRUM ROTATIONS | 0 - 10 [TIMES] | 0 - 10 [TIMES] |
| | GAS TYPES | CO₂, Ar, N₂, O₂ | CO₂, Ar, N₂, O₂ |
| | PRESSURE | 5 - 40 [Pa] | 5 - 40 [Pa] |
| | FLOW RATE | 0-50[mL/minute] | 0 - 50 [mL/minute] |
| JOINING CONDITIONS | TEMPERATURE | 70 - 150 [°C] | (MELTING POINT-100) - (MELTING POINT ) [°C] |
| | PRESSURE | 0.5 - 20 [MPa] | 0.5 - 65 [MPa] |
| | TIME | 10 - 3600 [SECONDS] | 10 - 3600 [SECONDS] |

**Table 3**

| | PP | PA | PPS | PET | PC | PMMA |
|---|---|---|---|---|---|---|
| PP | ○ 25°C | ○ 25°C | × 25°C | ○ 25°C | ○ 25°C | ○ 25°C |
| | ○100°C | ○100°C | ○100°C | ○100°C | ○100°C | ○100°C |
| PA | | ○ 25°C | × 25°C | Δ 25°C | × 25°C | ○ 25°C |
| | | ○150°C | ○150°C | ○100°C | ○100°C | ○100°C |
| PPS | | | × 25°C | × 25°C | × 25°C | × 25°C |
| | | | ○220°C | ○100°C | × 100°C | × 100°C |
| PET | | | | ○ 25°C | ○ 25°C | ○ 25°C |
| | | | | ○100°C | ○100°C | ○100°C |
| PC | | | | | Δ 25°C | ○ 25°C |
| | | | | | × 100°C | ○100°C |
| PMMA | | | | | | ○ 25°C |
| | | | | | | ○100°C |

**Table 4**

| | Al | Cu | Ti | SUS | Fe |
|---|---|---|---|---|---|
| PP | × 25°C | × 25°C | × 25°C | Δ 25°C | |
| PA | | | | × 25°C | |
| | | | | × 100°C | |
| PPS | ○110°C | ○110°C | ○110°C | ○110°C | ○110°C |
| PET | | | | | |
| PC | | | | | |
| PMMA | × 100°C | × 100°C | × 100°C | × 100°C | |

**Table 5**

| | CF/PP | CF/PA | CF/PPS | CF/PET | CF/PC | CF/PEEK | CF/PEI | CF/epoxy |
|---|---|---|---|---|---|---|---|---|
| CF/PP | ○ 25°C | ○ 25°C | ○ 25°C | ○ 25°C | ○ 25°C | - | - | - |
| | ○ 60°C | | | | | | | |
| | ○100°C | ○125°C | ○100°C | ○100°C | ○100°C | | | |
| | ○150°C | | | | | | | |
| CF/PA | | ○ 25°C | × 25°C | Δ 25°C | × 25°C | ○210°C | ○200°C | ○140°C |
| | | ○150°C | ○100°C | ○100°C | ○100°C | | | |
| CF/PPS | | | Δ 150°C | × 25°C | × 25°C | ○210°C | ○200°C | ○140°C |
| | | | ○220°C | ○150°C | ○100°C | | | |
| CF/PET | | | | × 25°C | 25°C | - | - | - |
| | | | | × 50°C | × ○100°C | | | |
| | | | | × 80°C | | | | |
| CF/PC | | | | | × 80°C | - | - | - |
| CF/PEEK | | | | | | ○ 240-330°C | ○200°C | ○140°C |
| CF/PEI | | | | | | | ○200°C | ○140°C |
| CF/epoxy | | | | | | | | ○140°C |

**Table 6**

| | Al | Cu | Ti | sus | Fe |
|---|---|---|---|---|---|
| CF/PP | Δ 25°C | × 25°C | × 25°C | Δ 25°C | |
| | ○ 80°C | ○100°C | ○100°C | Δ 50°C | |
| | ○100°C | | | ○100°C | |
| CF/PA | × 25°C | Δ 100°C | × 100°C | × 25°C | |
| | ○100°C | | | ○100°C | |
| CF/PPS | ○110°C | ○110°C | ○110°C | ○110°C | ○110°C |
| CF/PET | | | | | |
| CF/PC | × 100°C | × 100°C | × 100°C | ×100°C | |

**Table 7**

| | STO | LAO | MgO | GLASS |
|---|---|---|---|---|
| PP | ○25°C | ○ 25°C | × 25°C | ○ 25°C |
| CF/PP | ○ 25°C | ○ 25°C | | ○ 25°C |
| | ○100°C | ○100°C | | ○100°C |

**Table 8**

| | PMMA |
|---|---|
| CF/PPS | × 100°C |

It is found that, by appropriately selecting the conditions, such as the temperature, pressure, and time, for bonding between the joining surfaces, the objects can be joined together in almost all of the combinations. More specifically, combinations of objects that can be joined together include: a combination of polypropylene and one of polypropylene, polyamides, polyphenylene sulfide, polyethylene terephthalate, polycarbonates, polymethyl methacrylate, aluminum, copper, titanium, iron, stainless steel, strontium titanate, lanthanum aluminate, magnesium oxide, and glass; a combination of a polyamide and one of polyamides, polyphenylene sulfide, polyethylene terephthalate, polycarbonates, polymethyl methacrylate, aluminum, copper, titanium, iron, and stainless steel; a combination of polyphenylene sulfide and one of polyphenylene sulfide, polyethylene terephthalate, polycarbonates, polymethyl methacrylate, aluminum, copper, titanium, iron, and stainless steel; a combination of polyethylene terephthalate and one of polyethylene terephthalate, polycarbonates, polymethyl methacrylate, aluminum, copper, titanium, iron, and stainless steel; a combination of a polycarbonate and one of polycarbonates, polymethyl methacrylate, aluminum, copper, titanium, iron, and stainless steel; a combination of polymethyl methacrylate and one of polymethyl methacrylate, aluminum, copper, titanium, iron, and stainless steel; a combination of a carbon fiber reinforced plastic containing polypropylene as a base material and one of polypropylene, polyamides, polyphenylene sulfide, polyethylene terephthalate, polycarbonates, polymethyl methacrylate, carbon fiber reinforced plastics containing polypropylene as a base material, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, stainless steel, strontium titanate, lanthanum aluminate, magnesium oxide, and glass; a combination of a carbon fiber reinforced plastic containing a polyamide as a base material and one of polypropylene, polyamides, polyphenylene sulfide, polyethylene terephthalate, polycarbonates, polymethyl methacrylate, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyphenylene sulfide as a base material and one of polypropylene, polyamides, polyphenylene sulfide, polyethylene terephthalate, polycarbonates, polymethyl methacrylate, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyethylene terephthalate as a base material and one of polypropylene, polyamides, polyphenylene sulfide, polyethylene terephthalate, polycarbonates, polymethyl methacrylate, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing a polycarbonate as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyether ether ketone as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyetherimide as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; and a combination of a carbon fiber reinforced plastic containing an epoxy resin as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel.

Particularly, with regard to some of the combinations of the objects, two objects can be joined together by bonding the joining surfaces thereof at room temperature. The room temperature is the temperature of the surrounding environment when bonding the joining surfaces is performed in which heating or cooling is not performed. However, when the room temperature is lower than ordinary temperatures (5-35 degrees C) because of the conditions of cold regions, high altitudes, and the winter season, or when the room temperature is higher than ordinary temperatures because of the conditions of tropical regions, sunlight, and surrounding heating elements, heating or cooling may be performed to adjust the room temperature to an ordinary temperature. Also, even with a combination of objects that can be joined together at room temperature, the joining surfaces may be heated to an appropriate temperature and joined together so as to improve the joining strength and joining speed.

The combinations of the objects that can be joined together at room temperature include: a combination of polypropylene and one of polypropylene, polyamides, polyphenylene sulfide, polyethylene terephthalate, polycarbonates, polymethyl methacrylate, stainless steel, strontium titanate, lanthanum aluminate, and glass; a combination of a polyamide and one of polyamides, polyethylene terephthalate, and polymethyl methacrylate; a combination of polyethylene terephthalate and one of polyethylene terephthalate, polycarbonates, and polymethyl methacrylate; a combination of a polycarbonate and one of polycarbonates and polymethyl methacrylate; a combination of polymethyl methacrylate and polymethyl methacrylate; a combination of a carbon fiber reinforced plastic containing polypropylene as a base material and one of polypropylene, polyamides, polyphenylene sulfide, polyethylene terephthalate, polycarbonates, carbon fiber reinforced plastics containing polypropylene as a base material, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, aluminum, stainless steel, strontium titanate, lanthanum aluminate, and glass; a combination of a carbon fiber reinforced plastic containing a polyamide as a base material and one of polypropylene, polyamides, polyethylene terephthalate, carbon fiber reinforced plastics each containing a polyamide as a base material, and carbon fiber reinforced plastics containing polyethylene terephthalate as a base material; a combination of a carbon fiber reinforced plastic containing polyphenylene sulfide as a base material and polypropylene; a combination of a carbon fiber reinforced plastic containing polyethylene terephthalate as a base material and one of polypropylene and polyamides; and a combination of a carbon fiber reinforced plastic containing a polycarbonate as a base material and polypropylene.

When objects of different types are joined together, if the joining surfaces are heated for pressure welding, the joined object may be bent or deformed because of the difference in coefficient of thermal expansion between the objects. However, with the aforementioned combinations of the objects, the objects can be joined together through pressure welding at room temperature, so that bending or deformation of the joined object can be restrained.

As described above, the joining of objects in the method according to the present embodiment is considered to be implemented by chemical reactions between functional groups generated on the joining surfaces. Accordingly, when the reaction temperature is raised, the reaction rate is generally increased and the number of functional groups used for reactions is also increased, so that the joining strength is increased. Therefore, the temperature, time, and pressure of joining may be selected depending on the required joining strength. The joining may be performed at conditions different from those shown in Tables 1 and 2. For example, the pressure or time of joining may be smaller than the values shown in Tables 1 and 2.

In the method according to the present embodiment, two objects are joined by bonding the joining surfaces thereof at a temperature lower than the melting points or softening points of substances included in the two objects, so that the two objects are not heat-sealed. Even when heating is needed for bonding, such heating is merely performed to accelerate the rates of chemical reactions between functional groups, and the object surfaces are not melted or softened.

### Example 8

A joined object was produced by providing, between two objects, a film or a sheet made of a material that can be joined with both of the two objects. This enables joining of two objects that cannot be easily joined directly, or joining at room temperature of two objects that require heating for their direct joining.

FIG. 37 schematically illustrates a configuration of a joined object in this Example. A joined object 60 is configured to include two objects 62 and 64 to be joined, and a film 66 disposed between the two objects 62 and 64. One surface of the film 66 is joined with the object 62, and the other surface of the film 66 is joined with the object 64. Accordingly, even though the two objects 62 and 64 cannot be easily joined directly, by selecting the film 66 that can be joined with both of the two objects 62 and 64, the two objects 62 and 64 can be strongly joined together via the film 66. Also, even if heating is necessary for direct joining of the two objects 62 and 64, by selecting the film 66 that can be joined with both of the two objects 62 and 64 at room temperature, the two objects 62 and 64 can be joined together via the film 66 at room temperature. Although a carbon fiber reinforced plastic used in the form of a woven sheet, such as a plain-woven sheet, does not have a flat joining surface, such a carbon fiber reinforced plastic can also be joined with another object by disposing the film 66 between the carbon fiber reinforced plastic and the another object. A joined object having the structure shown in FIG. 37 was produced, and strong joining between the two objects was ascertained.

The present invention has been described with reference to the aforementioned embodiment. However, the present invention is not limited thereto and also includes a form resulting from appropriate combination or replacement of the configurations in the embodiment. It is also to be understood that appropriate changes of the combination or the order of processes in the embodiment or various modifications, including design modifications, may be made based on the knowledge of those skilled in the art and that embodiments with such changes and modifications also fall within the scope of the present invention.

### INDUSTRIAL APPLICABILITY

The present invention is applicable to a method for joining two objects together to produce a joined object, and a joined object obtained by joining two objects together.

### REFERENCE SIGNS LIST

- 10: rotating drum-type plasma irradiation device
- 20: bell jar
- 22: electrode
- 24: rotating drum
- 26: specimen holder
- 28: gas inlet
- 30: cylinder
- 32: specimen

## Claims

1. A method for producing a joined object by joining two objects together, the method comprising:
irradiating joining surfaces of the respective two objects with plasma; and
bonding the joining surfaces irradiated with plasma, at a temperature lower than a melting point of a substance included in the objects.

2. The method for producing a joined object according to claim 1, wherein the bonding is performed at room temperature.

3. The method for producing a joined object according to claim 1, wherein the two objects are any one combination of objects among: a combination of polypropylene and one of polypropylene, polyamides, polyphenylene sulfide, polyethylene terephthalate, polycarbonates, polymethyl methacrylate, aluminum, copper, titanium, iron, stainless steel, strontium titanate, lanthanum aluminate, magnesium oxide, and glass; a combination of a polyamide and one of polyamides, polyphenylene sulfide, polyethylene terephthalate, polycarbonates, polymethyl methacrylate, aluminum, copper, titanium, iron, and stainless steel; a combination of polyphenylene sulfide and one of polyphenylene sulfide, polyethylene terephthalate, polycarbonates, polymethyl methacrylate, aluminum, copper, titanium, iron, and stainless steel; a combination of polyethylene terephthalate and one of polyethylene terephthalate, polycarbonates, polymethyl methacrylate, aluminum, copper, titanium, iron, and stainless steel; a combination of a polycarbonate and one of polycarbonates, polymethyl methacrylate, aluminum, copper, titanium, iron, and stainless steel; a combination of polymethyl methacrylate and one of polymethyl methacrylate, aluminum, copper, titanium, iron, and stainless steel; a combination of a carbon fiber reinforced plastic containing polypropylene as a base material and one of polypropylene, polyamides, polyphenylene sulfide, polyethylene terephthalate, polycarbonates, polymethyl methacrylate, carbon fiber reinforced plastics containing polypropylene as a base material, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, stainless steel, strontium titanate, lanthanum aluminate, magnesium oxide, and glass; a combination of a carbon fiber reinforced plastic containing a polyamide as a base material and one of polypropylene, polyamides, polyphenylene sulfide, polyethylene terephthalate, polycarbonates, polymethyl methacrylate, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyphenylene sulfide as a base material and one of polypropylene, polyamides, polyphenylene sulfide, polyethylene terephthalate, polycarbonates, polymethyl methacrylate, carbon fiber reinforced plastics containing polyphenylene sulfide as a base material, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyethylene terephthalate as a base material and one of polypropylene, polyamides, polyphenylene sulfide, polyethylene terephthalate, polycarbonates, polymethyl methacrylate, carbon fiber reinforced plastics containing polyethylene terephthalate as a base material, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing a polycarbonate as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyether ether ketone as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; a combination of a carbon fiber reinforced plastic containing polyetherimide as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel; and a combination of a carbon fiber reinforced plastic containing an epoxy resin as a base material and one of polypropylene, polyamides, polyphenylene sulfide, polyethylene terephthalate, polycarbonates, polymethyl methacrylate, carbon fiber reinforced plastics each containing a polycarbonate as a base material, carbon fiber reinforced plastics containing polyether ether ketone as a base material, carbon fiber reinforced plastics containing polyetherimide as a base material, carbon fiber reinforced plastics each containing an epoxy resin as a base material, aluminum, copper, titanium, iron, and stainless steel.

4. The method for producing a joined object according to claim 2, wherein the two objects are any one combination of objects among: a combination of polypropylene and one of polypropylene, polyamides, polyphenylene sulfide, polyethylene terephthalate, polycarbonates, polymethyl methacrylate, stainless steel, strontium titanate, lanthanum aluminate, and glass; a combination of a polyamide and one of polyamides, polyethylene terephthalate, and polymethyl methacrylate; a combination of polyethylene terephthalate and one of polyethylene terephthalate, polycarbonates, and polymethyl methacrylate; a combination of a polycarbonate and one of polycarbonates and polymethyl methacrylate; a combination of polymethyl methacrylate and polymethyl methacrylate; a combination of a carbon fiber reinforced plastic containing polypropylene as a base material and one of polypropylene, polyamides, polyphenylene sulfide, polyethylene terephthalate, polycarbonates, carbon fiber reinforced plastics containing polypropylene as a base material, carbon fiber reinforced plastics each containing a polyamide as a base material, carbon fiber reinforced plastics containing polyphenylene sulfide as a base material, carbon fiber reinforced plastics containing polyethylene terephthalate as a base material, carbon fiber reinforced plastics each containing a polycarbonate as a base material, aluminum, stainless steel, strontium titanate, lanthanum aluminate, and glass; a combination of a carbon fiber reinforced plastic containing a polyamide as a base material and one of polypropylene, polyamides, polyethylene terephthalate, carbon fiber reinforced plastics each containing a polyamide as a base material, and carbon fiber reinforced plastics containing polyethylene terephthalate as a base material; a combination of a carbon fiber reinforced plastic containing polyphenylene sulfide as a base material and polypropylene; a combination of a carbon fiber reinforced plastic containing polyethylene terephthalate as a base material and one of polypropylene and polyamides; and a combination of a carbon fiber reinforced plastic containing a polycarbonate as a base material and polypropylene.

5. The method for producing a joined object according to any one of claims 1 through 4, further comprising:
joining one of the two objects and one surface of a film that can be joined with both of the two objects; and
joining the other of the two objects and the other surface of the film.

6. A joined object formed by two objects joined together by chemical bonds between functional groups generated on joining surfaces of the respective two objects by plasma irradiation on the joining surfaces.

7. The joined object according to claim 6, further comprising a film disposed between the two objects, wherein
the joined object is formed with one surface of the film and one of the two objects joined together and with the other surface of the film and the other of the two objects joined together.
